# EUROPEAN PATENT SPECIFICATION

(11) **EP 2 164 274 B1**
(45) Date of publication and mention of the grant of the patent: **09.09.2015**
(21) Application number: 08757784.7
(22) Date of filing: 19.06.2008
(51) Int. Cl.: H04W 72/04, H04B 7/02, H04W 36/00, H04W 92/20

(54) **METHOD FOR IMPLEMENTING UPLINK MACRO DIVERSITY OF A WCDMA SYSTEM**
VERFAHREN ZUM IMPLEMENTIEREN VON AUFWÄRTSSTRECKEN-MAKRO-DIVERSITÄT EINES WCDMA-SYSTEMS
PROCÉDÉ SERVANT À METTRE EN PLACE UNE MACRODIVERSITÉ D'UNE LIAISON MONTANTE DU SYSTÈME WCDMA

(30) Priority: 21.06.2007 CN 200710109436
(43) Date of publication of application: 17.03.2010
(73) Proprietor: ZTE Corporation, Shenzhen, Guangdong 518057 (CN)
(72) Inventor: XU, Bin, Shenzhen Guangdong 518057 (CN)
(74) Representative: Ilgart, Jean-Christophe
(86) International application number: PCT/CN2008/071375
(87) International publication number: WO 2008/154880

(56) References cited:
- CN-A- 1 713 747
- CN-A- 1 870 814
- US-A1- 2004 213 297
- US-A1- 2004 213 297
- US-B1- 6 374 112
- TELECOM ITALIA ET AL: "Support of UL Micro Diversity Combining", 3GPP DRAFT; R3-061601, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Seoul, Korea; 20061017, 17 October 2006 (2006-10-17), XP050160484, [retrieved on 2006-10-17]
- HUAWEI CHINA MOBILE: "Improvement of UL Macro Diversity Combining in Serving Node B", 3GPP DRAFT; R3-061712, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Riga, Latvia; 20061101, 10 November 2006 (2006-11-10), XP050160608, [retrieved on 2006-11-01]

## Description

### Technical field

The present invention relates to soft switching technology of WCDMA (Wideband Code Division Multiple Access) system in mobile communication field, in particular, relates to a method for implementing uplink macro diversity during the process of cell soft hand-over of WCDMA system.

### Background of the invention

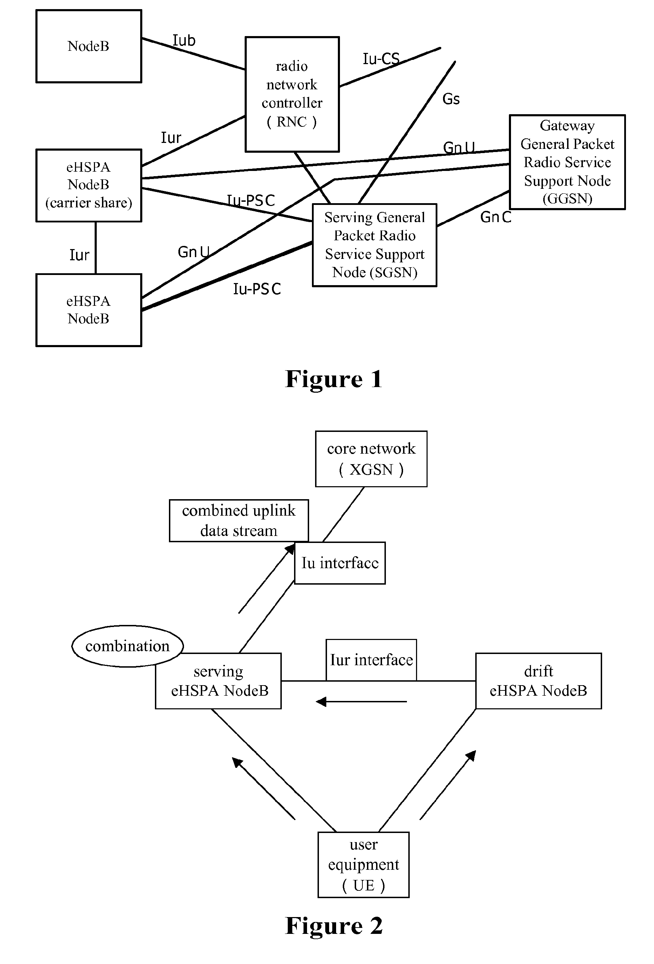

A new network architecture, which introduces a new network element - eHSPA Node B (evolved High Speed Packet Access Node B) as shown in figure 1, has been proposed in R7 version protocol of 3GPP (3rd Generation Partnership Project).

With this architecture, as for PS (Packet Switched) services, eHSPA Node B is integrated with the functions of RNC (Radio Network Controller) and connected with GGSN (Gateway General Packet Radio Service Support Node) and SGSN (Serving General Packet Radio Service Support Node) of PS CN (Core Network). And eHSPA Node B is connected with both conventional RNC and other eHSPA Nodes B via Iur interface.

Iur interface is the link for interconnecting RNS (Radio Network Subsystems) of WCDMA system. Different RNS can be connected with each other via an Iur interface. Through a dedicated protocol - RNSAP (Radio Network Subsystem Application Part), it can be achieved a crossing-RNS mobile management ofUE (User equipment) connecting RAN (Radio Access Network), which comprises functions such as the switching between RNS, and the processing and synchronization of radio resources.

3GPP provided a cross-Iur-interface eHSPA Node B macro diversity solution which is illustrated in Figure 2. Drift eHSPA Node B sends via Iur interface to a serving eHSPA Node B the uplink data of UE which is then combined by the serving eHSPA Node B with its received uplink data of UE and then sent to core network.

The air interface rate is increasingly high due to evolution of air interface technologies. Moreover, with the new network architecture a large number of cross-Iur-interface switches will occur. In such way, depending on the existing macro diversity strategies based on RL (Radio Link) of 3GPP, the requirements of the macro diversity gain and the decrease of bandwidth utilization rate of Iur interface can not be achieved simultaneously in some circumstances., such as the concurrence of VOIP (Voice Over IP) and PS data service of high rate. If the macro diversity of cross-Iur interface is employed, the PS data service of high rate will imposes larger bandwidth pressures on the transport of Iur interface; however, if the macro diversity is not employed and the macro diversity gain can not be obtained, it will affect service quality, especially IP telephone with higher requirement on time delay. 3GPP therefore confronts a problem of how to decrease the data transport pressure of Iur interface as much as possible on the premise of guaranteeing the macro diversity gain. In the present invention, it is equivalent whether to use cross-Iur-interface macro diversity and whether to establish Iur interface transport. US 2004/213297 and US 6374112 provide respective technical solutions; however, the above mentioned problem still remains unsolved.

### Summary of the invention

The present invention aims to provide a method of implementing uplink macro diversity in WCDMA (Wideband Code Division Multiple Access) system, to achieve both the macro diversity gain and the decreasing of Iur interface transport pressure by minor amendment to Iur interface protocol.

To solve the above technical problem, the present invention provides a method of implementing uplink macro diversity in WCDMA system, comprising the following steps:
(a) it is added into information element setting up Iur interface transport bearer one transport bearer setup indication information element for indicating whether the present transport channel sets up transport bearer;
(b) a serving evolved High Speed Packet Access Node B sets up individual bearers of Iur link via radio link setup message; a drift evolved High Speed Packet Access Node B, according to the indication of the serving evolved High Speed Packet Access Node B, allocates transport resources of the Iur interface and returns a response message.

Preferably, the above method further comprises step (c): the serving evolved High Speed Packet Access Node B dynamically re-allocates bearers according to utilization of Iur interface transport resources; the drift evolved High Speed Packet Access Node B re-allocates the transport resources of the Iur interface according to the indication of the serving evolved High Speed Packet Access Node B.

Preferably, in the above step (a), the information element of the Iur interface transport bearers comprises RL Specific DCH Information and RL Specific E-DCH Information.

Preferably, in the above step (a), the transport channel comprises one or more of a dedicated transport channel and enhanced dedicated transport channel.

Preferably, in the above step (a), the values of the transport bearer setup indication information element comprise: setting-up bearer and not-setting-up bearer.

Preferably, in the above step (a), when the value of the transport bearer setup indication information element is not-setting-up transport bearer, the information elements, corresponding to the transport channel Binding ID and Transport Layer Address, are not presented in the radio link setup message in the step (b).

Preferably, in the step (b), the serving evolved High Speed Packet Access Node B determines the corresponding macro diversity strategy according to the different service quality parameters of the individual bearers on the Iur interface link, and indicates whether the drift evolved High Speed Packet Access Node B to set up the transport bearer.

Preferably, in the step (b), the service which is similar to the service quality parameters is multiplexed in the same transport channel and performed with a same macro diversity strategy, whether or not to set up the transport bearer.

Preferably, the above method is as well applicable to the Iur interface between RNC and eHSPA Node B and the Iur interface between RNCs, and also applicable to the Iub interface.

The present invention possesses the following advantages or useful effects: it can be indicated whether or not to set up Iur interface transport bearer only by adding information elements into the existing flow, which has little influence on the existing flow; different macro diversity strategies can be selected for different bearers of the user based on the Iur interface, such that the service can achieve the macro diversity gain and the Iur interface data flow can be decreased; the macro diversity strategy of the Iur interface bearer can be dynamically adjusted according to the actual utilization of the Iur interface bandwidth so as to optimize the Iur interface utilization rate and the macro diversity performance of the system.

### Brief Description of the Drawings

Figure 1 is a schematic view showing the inter-networking of network elements according to R7 and earlier versions of 3GPP in relative technologies;
Figure 2 is a schematic view showing a macro diversity solution of cross-Iur-interface eHSPA Node B provided based on 3GPP of the relative technology;
Figure 3 is a signaling flow chart of setting up different macro diversity strategies according to different Iur bearers of the embodiment of the present invention.

### Detailed Description of the preferred embodiments

The main concept of the present invention is to employ different macro diversity strategies for different bearers of Iur interface on a same UE, so as to achieve both the macro diversity gain and the decreasing of Iur interface bandwidth pressures. It is carried out by adding for the serving eHSPA Node B an information element for indicating whether to set up the transport bearer into the information element (RL Specific DCH Information and RL Specific E-DCH Information) setting up Iur interface transport bearer, wherein its value can either be not-setting-up transport bearer or setting-up transport bearer. If the value is setting-up transport bearer, the information elements of, Binding ID and Transport Layer Address are used to identify the transport layer address; if the value is not-setting-up transport bearer, the information element of Binding ID and Transport Layer Address is not necessary to be presented. The present invention can dynamically adjust the macro diversity strategy of the Iur interface bearer according to the actual utilization of the Iur interface bandwidth, so as to optimize the Iur interface utilization rate and the macro diversity performance of the system.

The above technical solution of the present invention will be illustrated in more detail in combination with embodiments and accompanying drawings as follows:

It is prescribed in the current protocols that Iur interface bearers are all maintained in the unit of transport channel. For versions earlier than 3GPP R6, the Iur interface uplink transport channel capable of performing macro diversity is called a dedicated transport channel (DCH, Dedicated Channel); for versions later than R6, besides the DCH channel, the macro diversity of E-DCH MAC-d flow (Enhanced uplink DCH MAC-d flow) is also supported. As each of DCH and E-DCH MAC-d flow has specific QoS parameters, such as DCH dispatching priority, E-DCH re-transporting time, and power offset etc, and generally, only the service which has similar QoS can be multiplexed on the same transport channel and otherwise it is wasting of network capacity. As the same macro diversity strategy can be employed for the service with similar QoS, it can be chosen between setting up or not setting up Iur interface transport bearer based on the different transport channels of the Iur interface.

The amendments to the current Iur interface protocol mainly relate to the information element of RL Specific DCH Information and RL Specific E-DCH Information, as shown by bold characters in Tables 1 and 2.

**Table 1**

| Information Element/parameter title | formality (M-must , O-optional) | range | IE type and reference | Semantic description |
|---|---|---|---|---|
| RL Specific DCH Information | | 1..<maxnoof DCHs> | | |
| >DCH ID | M | | 9.2.1.16 | |
| >transport bearer setup indication | O | | Enumeration type (setting-up, not-setting-up) | Indicate whether to set up the transport channel |
| >Binding ID | O | | 9.2.1.3 | |
| >Transport Layer Address | O | | 9.2.1.62 | |

As shown in Tables 1 and 2, an information element for indicating whether to set up the transport bearer corresponding to the present transport channel is respectively added to the information elements of RL Specific DCH Information and RL Specific E-DCH Information of setting up Iur interface transport bearer, wherein the values can be not-setting-up transport bearer and setting-up transport bearer. If the value is the setting-up transport bearer, the information elements of Binding ID and Transport Layer Address corresponding to the transport channel can be used to indicate the transport layer address.

**Table 2**

| Information Element/parameter title | Formality (M-must , O-optional) | range | IE type and reference | Semantic description |
|---|---|---|---|---|
| RL Specific E-DCH Information | | 1.<maxnoofEDCH MACdFlows> | | |
| >E-DCH MAC-d Flow ID | M | | 9.2.1.91 | |
| >transport bearer setup indication | M | | Enumeration type (setting-up, not-setting-up) | Indicate whether to set up the transport bearer of the E-DCH Mac-d flow |
| >Binding ID | O | | 9.2.1.3 | |
| >Transport Layer Address | O | | 9.2.1.62 | |
| E-AGCH Power Offset | O | | 9.2.2.61 | |
| E-RGCH Power Offset | O | | 9.2.2.62 | |
| E-HICH Power Offset | O | | 9.2.2.63 | |

According to the indication of the serving eHSPA Node B, the drift eHSPA Node B does not need to include the information elements of Binding ID and Transport Layer Address in the information elements of DCH Information Response and E-DCH FDD Information Response of the response message, as for the Iur interface bearer not necessary to be set up.

The serving eHSPS Node B can also initiate re-allocation process to the Iur interface bearer according to the Iur interface bandwidth utilization or other reasons.

The present invention provides a method of implementing uplink macro diversity in WCDMA system, comprising the following steps:
(a) It is added to the information element setting up Iur interface transport bearer a transport bearer setup indication information element for indicating whether the Iur interface bearer of the present transport channel sets up the transport bearer;
   The information element of Iur interface transport bearers comprises RL Specific DCH Information and RL Specific E-DCH Information; the transport channel comprises one or more of a dedicated transport channel DCH and an enhanced dedicated transport channel flow E-DCH MAC-d flow; and the value of the transport bearer setup indication information element can be setting-up bearer and not-setting-up bearer.
(b) A serving eHSPA Node B sets up individual bearers of the Iur link via radio link setup message of the Iur interface; a drift eHSPA Node B, according to the indication of the serving eHSPA Node B, allocates the transport resources of the Iur interface and returns a response message;
(c) The serving eHSPA Node B dynamically re-allocates bearers according to utilization of Iur interface transport resources; the drift eHSPA Node B re-allocates the transport resources of the Iur interface according to the indication of the serving eHSPA Node B.

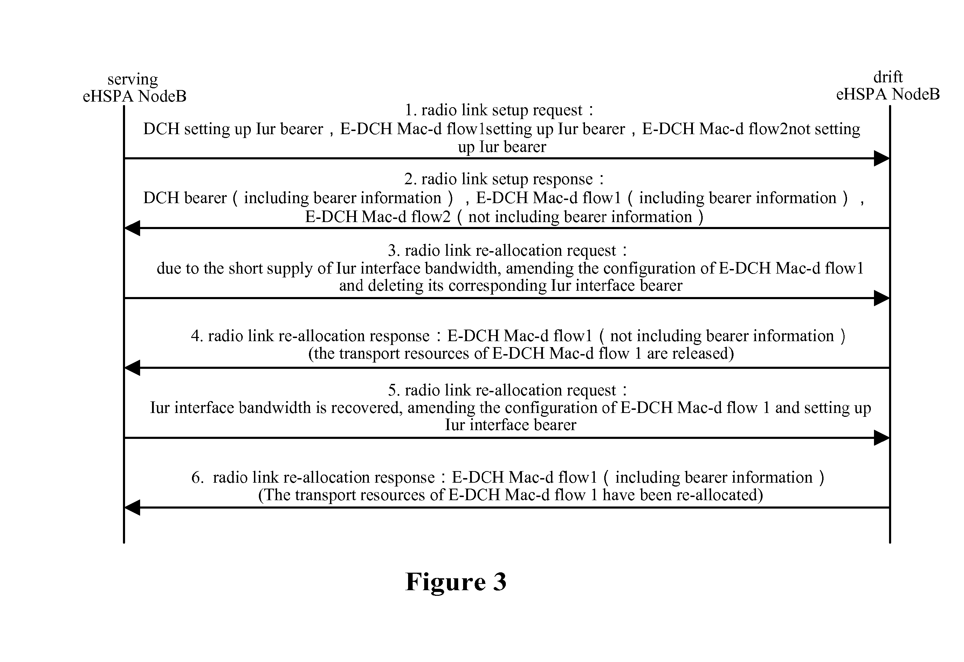

An embodiment of the present invention is illustrated by Figure 3 showing a signaling flow of controlling Iur interface macro diversity strategy, comprising the following steps:
Step 1, the user needs to set up an Iur interface link comprising one DCH transport bearer and two E-DCH Mac-d flow transport bearers. According to different QoS corresponding to the services on individual bearers, the serving eHSPA Node B indicates via a radio link setup message of Iur interface: the DCH adopts macro diversity to set up Iur interface transport bearer; E-DCH Mac-d flow 1 adopts macro diversity to set up Iur interface transport bearer; E-DCH Mac-d flow 2 does not adopt macro diversity, does not set up Iur interface transport bearer and the Binding ID and Transport Layer Address corresponding thereto are not necessary to be presented;
Step 2, the drift eHSPA Node B, according to the indication of the serving eHSPA Node B, allocates the transport resources of the Iur interface and returns a response message, wherein bearer information (referring to Binding ID and Transport Layer Address) is not necessary to be included for E-DCH Mac-d flow 2;
Step 3, due to the short supply of the Iur interface transport resources, the serving eHSPA Node B decides to release some Iur interface resources and amends to not-setting-up the transport bearer of E-DCH Mac-d flow 1 via a re-allocation process;
Step 4, the drift eHSPA Node B releases the transport bearer of the E-DCH Mac-d flow 1 according to the indication of the serving eHSPA Node B;
Step 5, when the Iur interface transport resources are reduced, the serving eHSPA Node B decides to recover the Iur interface transport bearer of the E-DCH Mac-d flow 1;
Step 6, the drift eHSPA Node B allocates transport bearer for the E-DCH Mac-d flow 1 according to the indication of the serving eHSPA Node B and transmits the transport address of the E-DCH Mac-d flow 1 to the serving eHSPA Node B via a response message.

It needs to be pointed out that the above method is easy to be carried out and generalized to the Iur interface between RNC and eHSPA Node B and the Iur interface between RNCs. Moreover, its principle is also applicable for Iub interface.

According to the embodiment of the present invention, different macro diversity strategies can be selected for the user based on the different bearers of the Iur interface so as to achieve both the macro diversity gain of the service and the decreasing of Iur interface data flow, which can be achieved by making minor amendment to the existing flow. Additionally, in the present invention, the macro diversity strategy of the Iur interface bearer can be dynamically adjusted according to the actual use of the Iur interface bandwidth, so as to optimize the Iur interface use rate and the macro diversity performance of the system.

## Claims

1. A method of implementing uplink macro diversity in a WCDMA, Wideband Code Division Multiple Access, system, comprising the following steps:
a) a transport bearer setup indication information element is added into the information elements setting up a lur interface transport bearer, wherein the transport bearer setup indication information element indicates whether the present transport channel sets up the transport bearer;
b) a serving evolved High Speed Packet Access Node B sets up individual bearers on the lur link via a radio link setup message; and a drift evolved High Speed Packet Access Node B, according to the indication of the serving evolved High Speed Packet Access Node B, allocates transport resources of the lur interface and returns a response message;
in the Step a), the value of the transport bearer setup indication information element comprises: setting-up-bearer and not-setting-up-bearer;
in the Step b), the serving evolved High Speed Packet Access Node B determines a corresponding macro diversity strategy according to different service quality parameters of individual bearers on the lur interface link and indicates whether the drift evolved High Speed Packet Access Node B sets up the transport bearer.

2. The method according to claim 1, **characterized in** further comprising the following step:
c) the serving evolved High Speed Packet Access Node B dynamically re-allocates bearers according to the utilization of the lur interface transport resources; and the drift evolved High Speed Packet Access Node B re-allocates the transport resources of the lur interface according to the indication of the serving evolved High Speed Packet Access Node B.

3. The method according to claim 1, **characterized in that**, in the Step a), the information element of the lur interface transport bearers comprises RL Specific DCH Information and RL Specific E-DCH Information.

4. The method according to claim 1, **characterized in that**, in the Step a), the transport channel comprises one or more of a dedicated transport channel and an enhanced dedicated transport channel flow.

5. The method according to claim 1, **characterized in that**, in the Step a), when the value of the transport bearer setup indication information element is not-setting-up-transport-bearer, the information element of Binding ID and Transport Layer Address corresponding to the transport channel is not presented in the radio link setup message in the Step (b).

6. The method according to claim 1, **characterized in that**, in the Step b), the service with similar service quality parameters is multiplexed in the same transport channel and performed with a same macro diversity strategy, whether or not to set up the transport bearer.

7. The method according to claim 1, **characterized in that** the method is applicable to the lur interface between RNC and eHSPA Node B and the lur interface between RNCs, and also applicable to lub interface.

## Patentansprüche

1. Verfahren zum Implementieren einer Uplink-Makro-Diversität in einem WCDMA, Breitband-Code-Mehrfachzugriff, -System, das die folgenden Schritte aufweist:
a) ein Transport-Bearer-Aufbau-Indikationsinformationselement wird in die Informationselemente eingefügt, die einen lur-Schnittstellentransport-Bearer aufbauen, wobei das Transport-Bearer-Aufbau-Indikationsinformationselement angibt, ob der derzeitige Transportkanal den Transport-Bearer aufbaut;
b) ein Serving-Evolved-Hochgeschwindigkeitspaketzugriffsknoten B baut einzelne Bearer auf der lur-Verbindung über eine Funkverbindungsaufbaunachricht auf; und ein Drift-Evolved-Hochgeschwindigkeitspaketzugriffsknoten B gemäß der Indikation des Serving-Evolved-Hochgeschwindigkeitspaketzugriffsknotens B ordnet Transportressourcen der lur-Schnittstelle zu und gibt eine Antwortnachricht zurück;
wobei in dem Schritt a) der Wert des Transport-Bearer-Aufbau-Indikationsinformationselementes einen Aufbau-Bearer und einen Nicht-Aufbau-Bearer aufweist;
wobei in dem Schritt b) der Serving-Evolved-Hochgeschwindigkeitspaketzugriffsknoten B eine entsprechende Makro-Diversität-Strategie entsprechend unterschiedlichen Service-Qualitätsparametern einzelner Bearer auf der lur-Schnittstellenverbindung bestimmt und angibt, ob der Drift-Evolved-Hochgeschwindigkeitspaketzugriffsknoten B den Transport-Bearer aufbaut.

2. Verfahren nach Anspruch 1, **dadurch gekennzeichnet, dass** es außerdem den folgenden Schritt aufweist:
c) der Serving-Evolved-Hochgeschwindigkeitspaketzugriffsknoten B ordnet Bearer entsprechend der Verwendung der lur-Schnittstellentransportressourcen dynamisch neu zu; und der Drift-Evolved-Hochgeschwindigkeitspaketzugriffsknoten B ordnet die Transportressourcen der lur-Schnittstelle entsprechend der Indikation des Serving-Evolved-Hochgeschwindigkeitspaketzugriffsknotens B neu zu.

3. Verfahren nach Anspruch 1, **dadurch gekennzeichnet, dass** in Schritt a) das Informationselement der lur-Schnittstellentransport-Bearer RL-spezifische DCH-Informationen und RL-spezifische E-DCH-Informationen aufweist.

4. Verfahren nach Anspruch 1, **dadurch gekennzeichnet, dass** in dem Schritt a) der Transportkanal einen oder mehrere aus einem zugehörigen Transportkanal- und einem erhöhten zugehörigen Transportkanalfluss aufweist.

5. Verfahren nach Anspruch 1, **dadurch gekennzeichnet, dass** wenn in dem Schritt a) der Wert des Transport-Bearer-Aufbau-Indikationsinformationselementes ein Nicht-Aufbau-Transport-Bearer ist, das Informationselement einer Binding-ID-und-Transportebenenadresse, die dem Transportkanal entspricht, in der Funkverbindungsaufbaunachricht in dem Schritt (b) nicht präsentiert wird.

6. Verfahren nach Anspruch 1, **dadurch gekennzeichnet, dass** in dem Schritt b) der Service mit ähnlichen Servicequalitätsparametern in demselben Transportkanal gemultiplext und mit derselben Makro-Diversität-Strategie unabhängig davon durchgeführt wird, ob der Transport-Bearer aufzubauen ist.

7. Verfahren nach Anspruch 1, **dadurch gekennzeichnet, dass** das Verfahren für die lur-Schnittstelle zwischen RNC und dem eHSPA-Knoten B und die lur-Schnittstelle zwischen RNCs und außerdem für eine lub-Schnittstelle anwendbar ist.

## Revendications

1. Procédé d'implémentation d'une macrodiversité de liaison montante dans un système d'accès multiple par répartition en code à large bande WCDMA, comprenant les étapes suivantes :
a) un élément d'informations d'indication d'instauration de support de transport est ajouté dans les éléments d'informations instaurant un support de transport d'interface Iur, l'élément d'informations d'indication d'instauration de support de transport indiquant si le présent canal de transport instaure le support de transport ;
b) un noeud d'accès par paquets à haut débit évolué de desserte B instaure des supports individuels sur la liaison Iur via un message d'instauration de liaison radio ; et un noeud d'accès par paquets à haut débit évolué de dérive B, selon l'indication du noeud d'accès par paquets à haut débit évolué de desserte B, alloue des ressources de transport de l'interface Iur et renvoie un message de réponse ;
à l'étape a),
la valeur de l'élément d'informations d'indication d'instauration de support de transport comprend : instauration de support et non-instauration de support ;
à l'étape b),
le noeud d'accès par paquets à haut débit évolué de desserte B détermine une stratégie de macrodiversité correspondante selon des paramètres de qualité de service différents de supports individuels sur la liaison d'interface Iur et indique si le noeud d'accès par paquets à haut débit évolué de dérive B instaure le support de transport.

2. Procédé selon la revendication 1, **caractérisé en ce qu'**il comprend en outre l'étape suivante :
c) le noeud d'accès par paquets à haut débit évolué de desserte B réalloue dynamiquement des supports selon l'utilisation des ressources de transport d'interface Iur ; et le noeud d'accès par paquets à haut débit évolué de dérive B réalloue les ressources de transport de l'interface Iur selon l'indication du noeud d'accès par paquets à haut débit évolué de desserte B.

3. Procédé selon la revendication 1, **caractérisé en ce que**, à l'étape a), l'élément d'informations des supports de transport d'interface Iur comprend des informations DCH spécifiques de RL et des informations E-DCH spécifiques de RL.

4. Procédé selon la revendication 1, **caractérisé en ce que**, à l'étape a), le canal de transport comprend un ou plusieurs parmi un canal de transport dédié et un flux de canal de transport dédié amélioré.

5. Procédé selon la revendication 1, **caractérisé en ce que**, à l'étape a), lorsque la valeur de l'élément d'informations d'indication d'instauration de support de transport est non-instauration de support de transport, l'élément d'informations ID de liaison et l'adresse de couche de transport correspondant au canal de transport ne sont pas présentés dans le message d'instauration de liaison radio à l'étape b).

6. Procédé selon la revendication 1, **caractérisé en ce que**, à l'étape b), le service ayant des paramètres de qualité de service similaires est multiplexé dans le même canal de transport et réalisé avec une même stratégie de macrodiversité, qu'il faille ou non instaurer le support de transport.

7. Procédé selon la revendication 1, **caractérisé en ce que** le procédé est applicable à l'interface Iur entre RNC et noeud B d'eHSPA et l'interface Iur entre des RNC, et également applicable à l'interface lub.
